# EUROPEAN PATENT APPLICATION

(11) **EP 1 672 865 A1**
(43) Date of publication of application: **21.06.2006**
(21) Application number: 04293060.2
(22) Date of filing: 20.12.2004
(51) Int. Cl.: H04L 29/06

(54) **Network unit for exchanging a signal with priority, fragmentation and/or aggregation information**

(71) Applicant: ALCATEL, 75008 Paris (FR)
(72) Inventor: Vermeiren Tim, B-9240 Zele (BE); Borghs Eric Frans Elisa, B-2440 Geel (BE)
(74) Representative: Narmon, Gisèle Marie Thérèse

(57) **Abstract**

Network units (1) for exchanging signals (20-70) comprising information (50) at layers (500) higher than internet protocol layers (300) comprise detector systems (2,3) arranged to detect fields of the information (50). To improve the detections of a status of priority, of fragmentation and/or of aggregation, the signal (20-70) is provided with further information (60) at further layers (600) higher than the layers (500) and the detector systems (2,3) are arranged to, in response to detections of the fields of the information (50), detect further fields of the further information (60). The further layers (600) comprise codec independent layers and yet further layers (700) higher than the further layers (600) comprises codec dependent layers. The layers (500) comprise real time protocol layers, the further layers (600) comprise generic real time protocol payload formats for transport abstractions and the yet further layers (700) comprise real time protocol payload formats for specific codec's. The further fields of the further information (60) comprise priority fields (611-d), fragmentation fields (611-b-c), aggregation fields (611-a), aggregation count fields (612) and aggregation header fields (613-618).

## Description

The invention relates to a network unit for exchanging a signal, which signal comprises information at a layer higher than an internet protocol layer and further comprises further information at a further layer higher than the layer, the network unit comprising a detector system arranged to detect a field of the information and further arranged to, in response to a detection of the field of the information, detect a further field of the further information. The network unit for example comprises a gateway or a network node.

A prior art network unit for exchanging a signal is known from A. MIYAZAKI, H. FUKUSHIMA, K. HATA, T. WIEBKE, R. HAKENBERG, C. BURMEISTER, MATSUSHITA: "RTP Payload Formats to Enable Multiple Selective Retransmissions" IETF STANDARD-WORKING-DRAFT, INTERNET EINGINEERING TASK FORCE, IETF, CH, vol. avt, no. 5, June 2002 (2002-06). This prior art document (D1) describes Real-time Transport Protocol (RTP) payload formats to enable multiple and optional selective retransmissions in RTP. Typically, RTP is run over a User Datagram Protocol (UDP). UDP does not perform well for unreliable channels. To make retransmissions in RTP possible, in this prior art document it is suggested to use a payload type field PT for indicating a selective payload format header or SEL header or a retransmission payload format header or RTX header. The SEL header may be used to indicate a priority.

Generally, the signal comprises information at a layer higher than an internet protocol layer, such as for example information at respectively a fourth layer (a user datagram protocol layer) or a fifth layer (a real time protocol layer), with the internet protocol layer being a third layer, and further comprises further information at a further layer higher than the layel, such as for example further information at respectively a fifth layer or a sixth layer. The network unit comprises a detector system arranged to detect a field of the information and further arranged to, in response to a detection of the field of the information, detect a further field of the further information.

A fragmentation of a signal and/or an aggregation of a signal is/are usually indicated and/or arranged at a second layer (an Ethernet layer) or at a third layer (an internet protocol layer). As a consequence, two kinds of problems come up. Firstly, certain network units such as for example a fourth layer gateway, a fifth layer gateway and an intermediate network node are not capable of performing detections at the second or the third layer. Secondly, in case of the fragmentation indication and/or the aggregation indication being spread over more than one layer and/or being located at more than one location within the signal, the processing of the signal gets more complicated. As a result, it is either impossible or more complicated to establish a fragmentation status and/or an aggregation status.

The known network unit is disadvantageous, inter alia, owing to the fact that it is relatively insufficiently equipped to detect a status, such as for example a fragmentation status and/or an aggregation status, without excluding an other status.

It is an object of the invention, inter alia, to provide a network unit as defined above which is relatively sufficiently equipped to detect a status, such as for example a fragmentation status and/or an aggregation status, without excluding an other status.

The network unit according to the invention is characterized in that the further field of the further information comprises
- a fragmentation field for allowing a fragmentation to be defined at a level of the further layer and for preventing that the fragmentation needs to be established at a level of a second layer or a third layer, the third layer being the internet protocol layer, or
- an aggregation field, an aggregation count field and at least one aggregation header field for allowing an aggregation to be defined at a level of the further layer and for preventing that the aggregation needs to be established at a level of a second layer or a third layer, the third layer being the internet protocol layer.
   By locating the fragmentation field and/or the aggregation field, the aggregation count field and at least one aggregation header field in the further field of the further information, the network unit according to the invention is relatively sufficiently equipped to detect a status, such as for example a fragmentation status and/or an aggregation status, without excluding an other status. This further field of the further information can comprise, owing to the fact that it forms part of an additional layer created on top of for example the fifth layer, a fragmentation status and/or an aggregation status as well as an other status.
   The network unit according to the invention is further advantageous in that the signal has become a unified signal comprising the further information in a reliable and centralized way.
   It should be noted that Y. KIKUCHI, TOSHIBA, T. NOMURA, NEC, S. FUKUNAGA, OKI, Y. MATSUI, MATSUSHITA, H. KIMATA, NTT: "RTP Payload Format for MPEG-4 Audio/visual Streams" IETF STANDARD, INTERNET ENGINEERING TASK FORCE, IETF, CH, November 2000 (2000-11) discloses the use of RTP payload formats for carrying MPEG-4 bitstreams without using MPEG-4 systems. This prior art document (D2) is cited in D1 and suggests to use a lower layer for a system which cannot handle a higher layer. So, D2 points away from the invention and does not disclose the fact that it is to be prevented that a status needs to be established at a level of a second layer or a third layer. Further, owing to the fact that D1 goes up in level and D2 goes down in level, D1 and D2 are not to be combined.
   An embodiment of the network unit according to the invention is characterized in that the fragmentation field comprises a start fragmentation field and/or an end fragmentation field.
   The fragmentation field for example comprises a start fragmentation field and/or an end fragmentation field and allows the fragmentation to be defined at the level of the further layer and prevents that the fragmentation needs to be established at the level of the second or the third layer. Other fragmentation mechanisms are not to be excluded.
   An embodiment of the network unit according to the invention is characterized in that the further field of the further information comprises
- a priority field for indicating a priority of the signal for allowing a priority to be defined at the level of the further layer and for preventing that the priority needs to be established at the level of the second or the third layer.

The priority field for indicating a priority of the signal allows the priority to be defined at the level of the further layer and prevents that the priority needs to be established at the level of the second or the third layer. Other priority mechanisms are not to be excluded.

It should be noted that D 1 discloses a SEL header which may be used to indicate a priority. D1 does however not disclose a priority field for indicating a priority of the signal for preventing that the priority needs to be established at the level of the second or the third layer, owing to the fact that D1 is about independent retransmission in RTP without the second or the third layer being involved. Further, D1 is unclear about the different levels of the different layers.

An embodiment of the network unit according to the invention is characterized in that the field of the information comprises a link to the further field of the further information.

The field of the information no longer comprises for example a prior art indication of a kind of audio codec or a kind of video codec to be used, but is provided with for example a link to the further field of the further information.

An embodiment of the network unit according to the invention is characterized in that the further layer comprises a codec independent layer and a yet further layer higher than the further layer comprises a codec dependent layer.

The further layer does not need to depend on the codec to be used, and can comprise further information for any kind of codec. The yet further layer depends on the codec to be used, and can comprise yet further information for a specific codec.

An embodiment of the network unit according to the invention is characterized in that the layer comprises a real time protocol layer, the further layer comprising a generic real time protocol payload format for a transport abstraction and the yet further layer comprising a real time protocol payload format for a specific codec, the field of the information comprising a real time protocol payload type field.

The real time protocol layer is a fifth layer. The further layer according to the invention will then become a sixth layer and the yet further layer, which was a sixth layer in a prior situation, will then become a seventh layer. The real time protocol payload field, in a prior art situation, was used for indicating a kind of audio codec or a kind of video codec to be used, and is according to the invention used for indicating a link to the further field of the further information. In case the detector system has detected the codec indication, the network unit knows that this signal is a prior art signal. In case the detector system has detected the link indication, the network unit knows that this signal is a signal according to the invention to which an additional layer (the further layer) has been added. The link refers to this additional layer (the further layer).

The invention also relates to a detector system as defined by claim 7, and to a signal as defined by claim 8, and to a method as defined by claim 9, and to a processor program product as defined by claim 10.

Embodiments of the detector system according to the invention and of the signal according to the invention and of the method according to the invention and of the processor program product according to the invention correspond with the embodiments of the network unit according to the invention.

The invention is based upon an insight, inter alia, that existing layers offer a relatively insufficient numbers of possibilities when preventing that fragmentation and/or aggregation need to be established at a level of a second layer or a third layer, the third layer being the internet protocol layer, and is based upon a basic idea, inter alia, that an additional layer is to be introduced to offer, in combination with the existing layers, a relatively sufficient numbers of possibilities and to prevent that fragmentation and/or aggregation need to be established at a level of a second layer or a third layer, the third layer being the internet protocol layer.

The invention solves the problem, inter alia, to provide a network unit as defined above which is relatively sufficiently equipped to detect a status, such as for example a fragmentation status and/or an aggregation status, without excluding an other status, and is advantageous, inter alia, in that the signal has become a unified signal comprising the further information in a reliable and centralized way.

These and other aspects of the invention will be apparent from and elucidated with reference to the embodiments(s) described hereinafter.

The invention also relates to a detector system for use in a network unit for exchanging a signal, which signal comprises information at a layer higher than an internet protocol layer, the network unit comprising the detector system arranged to detect a field of the information, which detector system according to the invention is characterized in that the signal further comprises further information at a further layer higher than the layer, the detector system being further arranged to, in response to a detection of the field of the information, detect a further field of the further information.

The invention also relates to a signal to be exchanged via a network unit, which signal comprises information at a layer higher than an internet protocol layer, the network unit comprising a detector system arranged to detect a field of the information, which signal according to the invention is characterized in that the signal further comprises further information at a further layer higher than the layer, the detector system being further arranged to, in response to a detection of the field of the information, detect a further field of the further information.

The invention also relates to a method for exchanging a signal, which signal comprises information at a layer higher than an internet protocol layer, the method comprising a detecting step for detecting a field of the information, which method according to the invention is characterized in that the signal further comprises further information at a further layer higher than the layer, the method further comprising a further detecting step for, in response to a detection of the field of the information, detecting a further field of the further information.

The invention also relates to a processor program product for exchanging a signal, which signal comprises information at a layer higher than an internet protocol layer, the processor program product comprising a detecting function for detecting a field of the information, which processor program product according to the invention is characterized in that the signal further comprises further information at a further layer higher than the layer, the processor program product further comprising a further detecting function for, in response to a detection of the field of the information, detecting a further field of the further information.

Embodiments of the detector system according to the invention and of the signal according to the invention and of the method according to the invention and of the processor program product according to the invention correspond with the embodiments of the network unit according to the invention.

The invention is based upon an insight, inter alia, that existing layers offer a relatively insufficient numbers of possibilities, and is based upon a basic idea, inter alia, that an additional layer is to be introduced to offer, in combination with the existing layers, a relatively sufficient numbers of possibilities.

The invention solves the problem, inter alia, to provide a network unit as defined above which is relatively sufficiently equipped to detect a status, such as for example a priority status, a fragmentation status and/or an aggregation status, without excluding an other status, and is advantageous, inter alia, in that the signal has become a unified signal comprising the further information in a reliable and centralized way.

These and other aspects of the invention will be apparent from and elucidated with reference to the embodiments(s) described hereinafter.
Fig. 1 shows diagrammatically a network unit according to the invention comprising a detector system according to the invention with two detectors,
Fig. 2 shows diagrammatically a network unit according to the invention comprising a detector system according to the invention with one detector,
Fig. 3 shows diagrammatically a signal according to the invention comprising information at a layer higher than an internet protocol layer and comprising further information at a further layer higher than the layer, and
Fig. 4 shows diagrammatically a part of the signal according to the invention disclosing the further information at the further layer higher than the layer in greater detail.

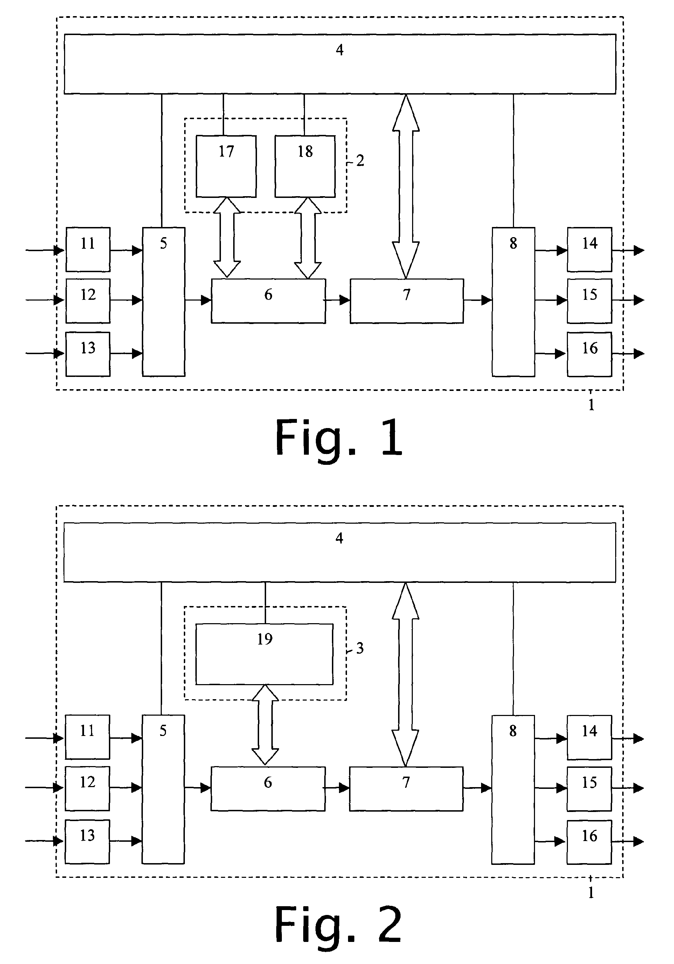

The network unit 1 according to the invention shown in Fig. 1 comprises three input interfaces 11-13 coupled via a first switch 5 to a first buffer 6. The first buffer 6 is coupled via a second buffer 7 and a second switch 8 to three output interfaces 14-16. The first buffer is further coupled indirectly to a processor system 4 via a detector system 2, the second buffer 6 is further coupled directly to the processor system 4. The detector system 2 comprises two detectors 17 and 18.

The network unit 1 according to the invention shown in Fig. 2 corresponds with the network unit 1 shown in Fig. 1, apart from the fact that it comprises a detector system 3 comprising a detector 19.

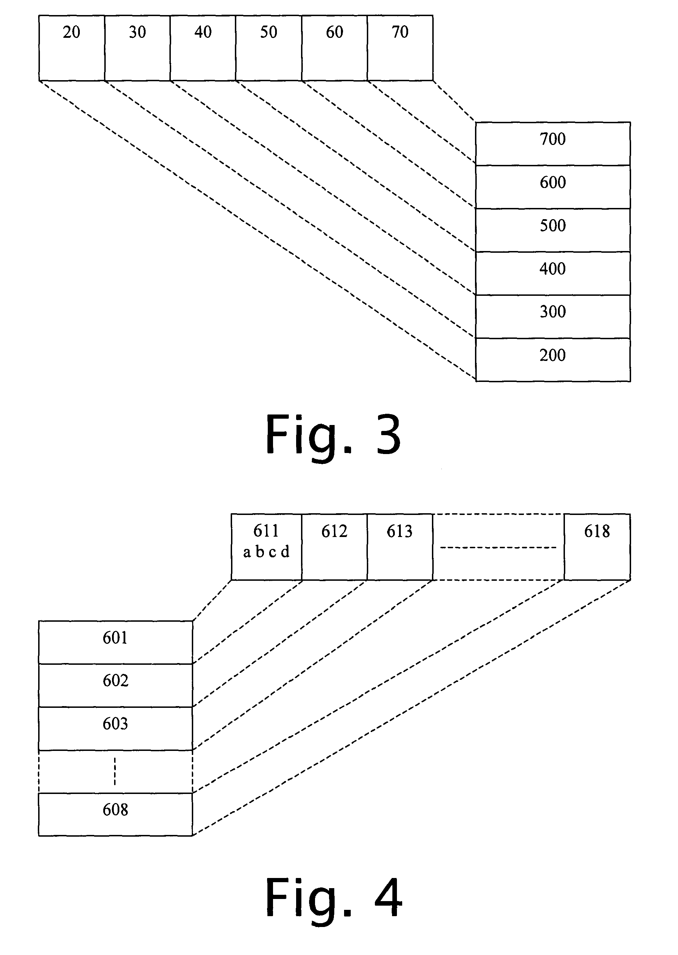

The signal 20-70 according to the invention shown in Fig. 3 such as for example a protocol data unit such as a packet, a cell or a frame, comprises second information 20 at a second layer 200 such as for example an Ethernet layer, third information 30 at a third layer 300 such as for example an internet protocol layer, fourth information 40 at a fourth layer 400 such as for example a user datagram protocol layer, fifth information 50 at a fifth layer 500 such as for example a real time protocol layer, sixth information 60 at a sixth layer 600 such as for example a generic real time protocol payload format for a transport abstraction and seventh information 70 at a layer 700 such as for example a real time protocol payload format for a specific codec (MPEG-4, H-264 etc.).

The part of the signal 20-70 according to the invention shown in Fig. 4 discloses the sixth information 60 at the sixth layer 600 in greater detail. The sixth information 60 comprises a field 611 comprising an aggregation field 611-a, a start fragmentation field 611-b, an end fragmentation field 611-c and a priority field 611-d for indicating a priority of the signal 20-70. The sixth information 60 comprises an aggregation count field 612 and aggregation header fields 613-618. In other words, the layer 600 comprises a part 601 related to the field 611, a part 602 related to the field 612, and parts 603-608 related to the fields 613-618.

In a prior art situation, the information 60 and the layer 600 are not present, and the information 70 and the layer 700 take the place of the information 60 and the layer 600. The signal 20-70 arrives via one of the input interfaces 11-13 and the first switch 5 at the first buffer 6, which buffers the signal 20-70. The detector system 2 detects via detector 17 a field of the information 50. This field, in case of the information 50 being information at the fifth layer 500, for example indicates a kind of audio codec or a kind of video codec to be used (more precisely, this field indicates the codec used at the transmitting side and the codec to be used at the receiving side).

A priority of the signal 20-70, a fragmentation of the signal 20-70 and/or an aggregation of the signal 20-70 is/are usually indicated and/or arranged at the second layer 200 or at the third layer 300. As a consequence, two kinds of problems come up. Firstly, certain network units such as for example a fourth layer gateway, a fifth layer gateway and an intermediate network node are not capable of performing detections at the second layer 200 or the third layer 300. Secondly, in case of the priority indication, the fragmentation indication and/or the aggregation indication being spread over more than one layer and/or being located at more than one location within the signal 20-70, the processing of the signal gets more complicated. As a result, it is either impossible or more complicated to establish a priority status, a fragmentation status and/or an aggregation status.

According to the invention, the sixth information 60 and the sixth layer 600 are introduced in addition to the fifth/seventh information 50/70 and the fifth/seventh layer 500/700, and the detector system 2 is arranged to, in response to the detection of the field of the fifth information 50, detect the sixth information 60 at the sixth layer 600, for example via the detector 18. As a result, the network unit 1 according to the invention is relatively sufficiently equipped to detect a status, such as for example a priority status, a fragmentation status and/or an aggregation status, without excluding an other status. Thereto, the field of the information 50 no longer comprises for example the prior art indication of the kind of audio codec or the kind of video codec to be used, but is provided with for example a link to a field of the sixth information 60. This field of the sixth information 60 can comprise, owing to the fact that it forms part of the additional layer 600 created on top of for example the fifth layer 500, the priority status as well as the fragmentation status as well as the aggregation status as well as an other status. The network unit 1 according to the invention is further advantageous in that the signal 20-70 has become a unified signal comprising the sixth information 60 in a reliable and centralized way.

The sixth layer 600 comprises for example a codec independent layer. This sixth layer 600 does not need to depend on the codec to be used, and can comprise sixth information for any kind of codec. The seventh layer 700 comprises for example a codec dependent layer. This seventh layer depends on the codec to be used, and can comprise seventh information for a specific codec.

The fifth layer 500 for example comprises a real time protocol layer, the sixth layer for example comprises a generic real time protocol payload format for a transport abstraction and the seventh layer 700 for example comprises a real time protocol payload format for a specific codec.

The field of the fifth information 50 comprises a real time protocol payload type field. This real time protocol payload field, in the prior art situation, was used for indicating the kind of audio codec or the kind of video codec to be used, and is according to the invention used for indicating a link to the field of the sixth information 60. In case the detector system 2 has detected the codec indication, the network unit 1 knows that this signal is a prior art signal. In case the detector system 2 has detected the link indication, the network unit 1 knows that this signal is a signal according to the invention to which an additional layer (the sixth layer 600) has been added. The link refers to this sixth layer 600.

The field of the sixth information 60 may comprise a priority field 611-d for indicating a priority of the signal 20-70. The priority field for indicating a priority of the signal allows the priority to be defined at the level of the sixth layer 600 and prevents that the priority needs to be established at the level of the second layer 200 or the third layer 300. The field of the sixth information 60 may comprise a fragmentation field 611-b-c. This fragmentation field 611-b-c for example comprises a start fragmentation field 611-b and/or an end fragmentation field 611-c and allows the fragmentation to be defined at the level of the sixth layer 600 and prevents that the fragmentation needs to be established at the level of the second layer 200 or the third layer 300. The field of the sixth information 60 may comprise an aggregation field 611-a, an aggregation count field 612 and at least one aggregation header field 613-618. The aggregation field 611-a, the aggregation count field 612 and the one or more aggregation header fields 613-618 allow the aggregation to be defined at the level of the sixth layer 600 and prevent that the aggregation needs to be established at the level of the second layer 200 or the third layer 300.

As a result, the network unit 1 according to the invention has the possibility, for example via the second buffer 7, of adapting the priority of the signal 20-70 and/or of fragmentizing the signal 20-70 (and adapting the start fragmentation field 611-b and/or the end fragmentation field 611-c) and/or of aggregating the signal 20-70 (and adapting the aggregation field 611-a, the aggregation count field 612 and/or at least one aggregation header field 613-618), without needing to go down to the second layer 200 or the third layer 300, and without experiencing complications resulting from the priority indication and/or the fragmentation indication and/or the aggregation indication being spread over more than one layer and/or being located at more than one location within the signal 20-70. Via the second switch 8 and one of the output interfaces 14-16 the signal 20-70 (possibly with an amended priority and/or in fragmentized form and/or in aggregated form) is then outputted.

The relation between the information 20 (30) (40) (50) (60) (70) and the layer 200 (300) (400) (500) (600) (700) may be as shown in Fig. 3, but may alternatively be less straight. Locations of the information 20 (30) (40) (50) (60) (70) may be changed and overlappings of the information 20 (30) (40) (50) (60) (70) may be possible. The sixth layer 600 being inserted between the fifth layer 500 and the seventh (prior art: sixth) layer 700 and the sixth information 60 being inserted between the fifth information 50 and the seventh (prior art: sixth) information 70 are just examples. A similar addition and/or insertion may be done for any layer above the third layer 300 and for any information at a layer higher than the third layer 300.

The network unit 1 according to the invention may be an intermediate network node or an edge node and may be coupled to other network units, to other network nodes and to subscriber equipment. The network unit 1 may be a fourth layer gateway or a fifth layer gateway, without excluding other gateways. Instead of a detector system 2 comprising different detectors 17 and 18 for different detections, a detector system 3 comprising one detector 19 for different detections may be used. For both situations, the processor system 4 will be in control. Further detectors are not to be excluded.

The expression "for" in for example "for exchanging" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of detecting do not exclude further steps/functions, like for example, inter alia, the steps/functions described for the Figures.

## Claims

1. Network unit (1) for exchanging a signal (20-70), which signal (20-70) comprises information (50) at a layer (500) higher than an internet protocol layer (300), the network unit (1) comprising a detector system (2,3) arranged to detect a field of the information (50), **characterized in that** the signal (20-70) further comprises further information (60) at a further layer (600) higher than the layer (60), the detector system (2,3) being further arranged to, in response to a detection of the field of the information (50), detect a further field of the further information (60).

2. Network unit (1) as defined in claim 1, **characterized in that** the further layer (600) comprises a codec independent layer.

3. Network unit (1) as defined in claim 2, **characterized in that** a yet further layer (700) higher than the further layer (600) comprises a codec dependent layer.

4. Network unit (1) as defined in claim 3, **characterized in that** the layer (500) comprises a real time protocol layer, the further layer (600) comprising a generic real time protocol payload format for a transport abstraction and the yet further layer (700) comprising a real time protocol payload format for a specific codec.

5. Network unit (1) as defined in claim 4, **characterized in that** the field of the information (50) comprises a real time protocol payload type field.

6. Network unit (1) as defined in claim 4 or 5, **characterized in that** the further field of the further information (60) comprises a priority field (611-d) for indicating a priority of the signal (20-70).

7. Network unit (1) as defined in claim 4 or 5, **characterized in that** the further field of the further information (60) comprises a fragmentation field (611-b-c).

8. Network unit (1) as defined in claim 4 or 5, **characterized in that** the further field of the further information (60) comprises an aggregation field (611-a), an aggregation count field (612) and at least one aggregation header field (613-618).

9. Detector system (2,3) for use in a network unit (1) for exchanging a signal (20-70), which signal (20-70) comprises information (50) at a layer (500) higher than an internet protocol layer (300), the network unit (1) comprising the detector system (2,3) arranged to detect a field of the information (50), **characterized in that** the signal (20-70) further comprises further information (60) at a further layer (600) higher than the layer (500), the detector system (2,3) being further arranged to, in response to a detection of the field of the information (50), detect a further field of the further information (60).

10. Signal (20-70) to be exchanged via a network unit (1), which signal (20-70) comprises information (50) at a layer (500) higher than an internet protocol layer (300), the network unit (1) comprising a detector system (2,3) arranged to detect a field of the information (50), **characterized in that** the signal (20-70) further comprises further information (60) at a further layer (600) higher than the layer (500), the detector system (2,3) being further arranged to, in response to a detection of the field of the information (50), detect a further field of the further information (60).

11. Method for exchanging a signal (20-70), which signal (20-70) comprises information (50) at a layer (500) higher than an internet protocol layer (300), the method comprising a detecting step for detecting a field of the information (50), **characterized in that** the signal (20-70) further comprises further information (60) at a further layer (600) higher than the layer (500), the method further comprising a further detecting step for, in response to a detection of the field of the information (50), detecting a further field of the further information (60).

12. Processor program product for exchanging a signal (20-70), which signal (20-70) comprises information (50) at a layer (500) higher than an internet protocol layer (300), the processor program product comprising a detecting function for detecting a field of the information (50), **characterized in that** the signal (20-70) further comprises further information (60) at a further layer (600) higher than the layer (500), the processor program product further comprising a further detecting function for, in response to a detection of the field of the information (50), detecting a further field of the further information (60).

## Amended claims

### Amended claims in accordance with Rule 86(2) EPC.

**1.** Network unit (1) for exchanging a signal (20-70), which signal (20-70) comprises information (50) at a layer (500) higher than an internet protocol layer (300) and further comprises further information (60) at a further layer (600) higher than the layer (500), the network unit (1) comprising a detector system (2,3) arranged to detect a field of the information (50) and further arranged to, in response to a detection of the field of the information (50), detect a further field of the further information (60), **characterized in that** the further field of the further information (60) comprises
- a fragmentation field (611-b-c) for allowing a fragmentation to be defined at a level of the further layer (600) and for preventing that the fragmentation needs to be established at a level of a second layer (200) or a third layer (300), the third layer (300) being the internet protocol layer (300), or
- an aggregation field (611-a), an aggregation count field (612) and at least one aggregation header field (613-618) for allowing an aggregation to be defined at a level of the further layer (600) and for preventing that the aggregation needs to be established at a level of a second layer (200) or a third layer (300), the third layer (300) being the internet protocol layer (300).

**2.** Network unit (1) as defined in claim 1, **characterized in that** the fragmentation field (611-b-c) comprises a start fragmentation field (611-b) and/or an end fragmentation field (611-c).

**3.** Network unit (1) as defined in claim 1 or 2, **characterized in that** the further field of the further information (60) comprises
- a priority field (611-d) for indicating a priority of the signal (20-70) for allowing a priority to be defined at the level of the further layer and for preventing that the priority needs to be established at the level of the second or the third layer.

**4.** Network unit (1) as defined in claim 1, 2 or 3, **characterized in that** the field of the information (50) comprises a link to the further field of the further information (60).

**5.** Network unit (1) as defined in claim 1, 2, 3 or 4, **characterized in that** the further layer (600) comprises a codec independent layer and a yet further layer (700) higher than the further layer (600) comprises a codec dependent layer.

**6.** Network unit (1) as defined in claim 1, 2, 3, 4 or 5, **characterized in that** the layer (500) comprises a real time protocol layer, the further layer (600) comprising a generic real time protocol payload format for a transport abstraction and the yet further layer (700) comprising a real time protocol payload format for a specific codec, the field of the information (50) comprising a real time protocol payload type field.

**7.** Detector system (2,3) for use in a network unit (1) for exchanging a signal (20-70), which signal (20-70) comprises information (50) at a layer (500) higher than an internet protocol layer (300) and further comprises further information (60) at a further layer (600) higher than the layer (500), the detector system (2,3) being arranged to detect a field of the information (50) and further being arranged to, in response to a detection of the field of the information (50), detect a further field of the further information (60), **characterized in that** the further field of the further information (60) comprises
- a fragmentation field (611-b-c) for allowing a fragmentation to be defined at a level of the further layer (600) and for preventing that the fragmentation needs to be established at a level of a second layer (200) or a third layer (300), the third layer (300) being the internet protocol layer (300), or
- an aggregation field (611-a), an aggregation count field (612) and at least one aggregation header field (613-618) for allowing an aggregation to be defined at the level of the further layer (600) and for preventing that the aggregation needs to be established at a level of a second layer (200) or a third layer (300), the third layer (300) being the internet protocol layer (300).

**8.** Signal (20-70) to be exchanged via a network unit (1), which signal (20-70) comprises information (50) at a layer (500) higher than an internet protocol layer (300) and further comprises further information (60) at a further layer (600) higher than the layer (500), the network unit (1) comprising a detector system (2,3) arranged to detect a field of the information (50) and further arranged to, in response to a detection of the field of the information (50), detect a further field of the further information (60), **characterized in that** the further field of the further information (60) comprises
- a fragmentation field (611-b-c) for allowing a fragmentation to be defined at a level of the further layer (600) and for preventing that the fragmentation needs to be established at a level of a second layer (200) or a third layer (300), the third layer (300) being the internet protocol layer (300), or
- an aggregation field (611-a), an aggregation count field (612) and at least one aggregation header field (613-618) for allowing an aggregation to be defined at the level of the further layer (600) and for preventing that the aggregation needs to be established at a level of a second layer (200) or a third layer (300), the third layer (300) being the internet protocol layer (300).

**9.** Method for exchanging a signal (20-70), which signal (20-70) comprises information (50) at a layer (500) higher than an internet protocol layer (300) and further comprises further information (60) at a further layer (600) higher than the layer (500), the method comprising a detecting step of detecting a field of the information (50) and a further detecting step of, in response to a detection of the field of the information (50), detecting a further field of the further information (60), **characterized in that** the further field of the further information (60) comprises
- a fragmentation field (611-b-c) for allowing a fragmentation to be defined at a level of the further layer (600) and for preventing that the fragmentation needs to be established at a level of a second layer (200) or a third layer (300), the third layer (300) being the internet protocol layer (300), or
- an aggregation field (611-a), an aggregation count field (612) and at least one aggregation header field (613-618) for allowing an aggregation to be defined at the level of the further layer (600) and for preventing that the aggregation needs to be established at a level of a second layer (200) or a third layer (300), the third layer (300) being the internet protocol layer (300).

**10.** Processor program product for exchanging a signal (20-70), which signal (20-70) comprises information (50) at a layer (500) higher than an internet protocol layer (300) and further comprises further information (60) at a further layer (600) higher than the layer (500), the processor program product comprising a detecting function of detecting a field of the information (50) and a further detecting function of, in response to a detection of the field of the information (50), detecting a further field of the further information (60), **characterized in that** the further field of the further information (60) comprises
- a fragmentation field (611-b-c) for allowing a fragmentation to be defined at a level of the further layer (600) and for preventing that the fragmentation needs to be established at a level of a second layer (200) or a third layer (300), the third layer (300) being the internet protocol layer (300), or
- an aggregation field (611-a), an aggregation count field (612) and at least one aggregation header field (613-618) for allowing an aggregation to be defined at the level of the further layer (600) and for preventing that the aggregation needs to be established at a level of a second layer (200) or a third layer (300), the third layer (300) being the internet protocol layer (300).
